# EUROPEAN PATENT APPLICATION

(11) **EP 1 566 354 A1**
(43) Date of publication of application: **24.08.2005**
(21) Application number: 03775895.0
(22) Date of filing: 26.11.2003
(51) Int. Cl.: B65G 63/00, B65G 61/00

(54) **CONTAINER TRANSPORTATION ADJUSTMENT/MANAGEMENT SYSTEM AND CONTAINER TRANSPORTATION ADJUSTMENT/MANAGEMENT METHOD**

(30) Priority: 29.11.2002 JP 2002348589
(71) Applicant: HONDA MOTOR CO., Ltd., Tokyo 107-8556 (JP)
(72) Inventor: IMANISHI, Kouji, c/o HONDA MOTOR CO. LTD., Tokyo 107-8556 (JP)
(74) Representative: Donné, Eddy
(86) International application number: PCT/JP2003/015077
(87) International publication number: WO 2004/050517

(57) **Abstract**

This invention makes it possible to improve the efficiency of transporting container and to reduce transportation costs.

When performing coordination management for transporting containers belonging to the same company, various information indicating the scheduled date for unloading based on the import documents for location A, the specifications for the containers used, the number of containers used and the shipping company used is registered in the location-A D/B 30; various information indicating the scheduled date for loading based on the export documents for location B, the specifications for the containers used, the number of containers used and the shipping company used is registered in the location-B D/B 40; and when the date that the container will enter the port is set, coordination management for transporting containers is performed based on the various information registered in the location-A D/B 30 and location-B D/B 40 to find which containers belonging to the same shipping company can be shared between location A and location B; and the results of that coordination management can be accessed by terminals 50 to 70 located at the container yard at the port and at location A and location B.

## Description

### BACKGROUND OF THE INVENTION

### Field of the Invention:

This invention relates to a container transport coordination management system and container transport coordination management method that is suitable for transport coordination management of containers belonging to the same shipping company.

### Description of the Related Art:

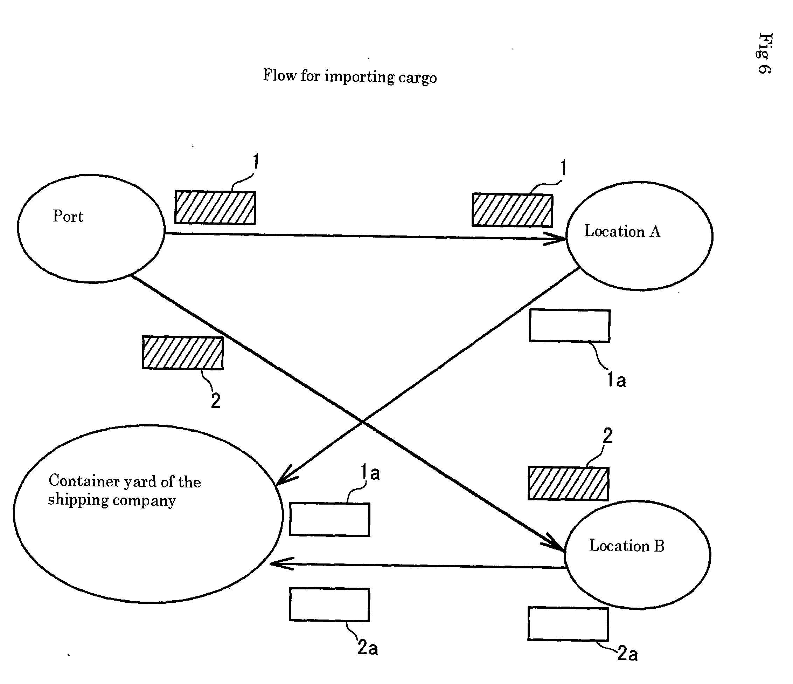

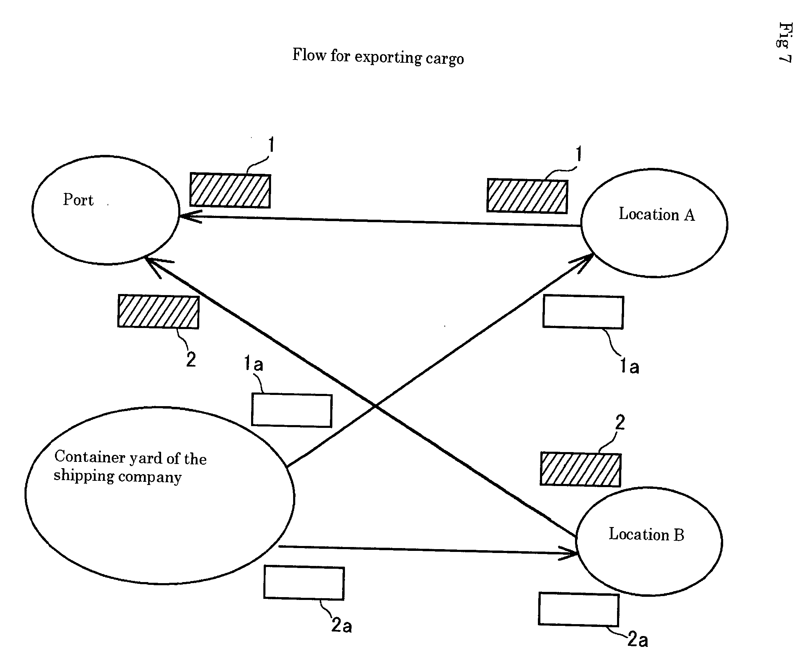

When importing cargo, for example as shown in Fig. 6, in the case of transporting a loaded container 1 to location A, after the container 1 reaches the container yard at the port for going through customs procedures, and after customs procedures are finished, a truck receives the container 1 in the container yard and transports that container 1 to location A. At location A, after the load inside the container 1 is unloaded, that empty container 1a is then transported by the same truck to the container yard of the shipping company. Also, in the case of transporting a loaded container 2 to location B as well, the container 2 is transported to location B in the same way as described above, and after the load inside container B is unloaded at location B, that empty container 2a is transported by the same truck to the container yard of the shipping company.

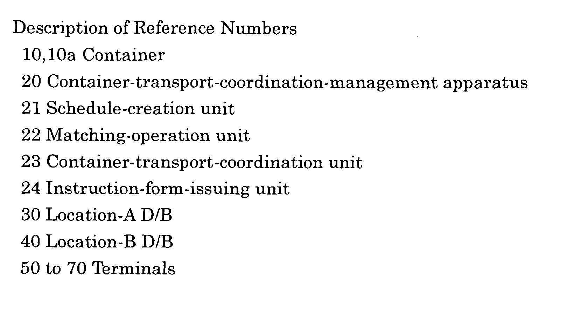

On the other hand, when exporting cargo, for example as shown in Fig. 7, in the case of exporting cargo from location A, an empty container 1a is transported by truck from the container yard of the shipping company to location A, and then the loaded container 1 is transported by the same truck to the container yard at the port. In the case of transporting cargo from location B as well, the empty container 2a is transported by truck from the container yard of the shipping company to location B in the same way as described above, then the loaded container 2 is transported by the same truck to the container yard at the port.
When the empty containers 1a, 2a are used for importing cargo in this way, they are transported from location A and location B to the container yard of the shipping company, and when used for exporting cargo, they are transported from the container yard of the shipping company to location A and location B. Therefore, when the transport distance is long, and the empty containers 1a, 2a must be transported between the container yard of the shipping company and location A and location B, the transport efficiency for the containers 1, 2, 1a, 2a becomes poor and prevents reduction of transportation costs.

In Japanese patent publication no 2002-211762, a system is proposed in which it is possible for the import/export company to coordinate the empty containers according to volume of the requested cargo making it possible to reduce import/export costs. This system has a consolidated management server that is capable of sending or receiving data between the terminal of the import/export company, the terminal of the container transport company and the terminal of the customs broker, and this consolidated management server comprises: a container-transport-company file that stores container-transport information of the container-transport company such as scheduled sailing of the container ship or the container capacity; an import/export company file that stores cargo information such as the amount or item classification of the cargo requested to the import/export company; and a customs broker file that stores customs information such as the customs fee of the customs broker; and in this system the consolidated management server is accessed from the terminal of the import/export company, and it makes it possible to search empty-container information that makes it possible to reduce import/export costs according to the capacity of the requested cargo, and import/export estimate information such as the costs of customs procedures.

However, in Japanese patent publication no 2002-211762 mentioned above, it is possible to reduce costs such as the cost for customs procedures and costs for import/export procedures for one item of cargo by having charges for just the capacity occupied by the cargo in the container, however, it is not possible to improve the transport efficiency of the empty containers 1a, 2a described above.

This invention takes into consideration the conditions described above, and provides a container transport coordination management system and container transport coordination management method that makes it possible to improve transport efficiency for containers from the same shipping company, and reduce the transportation costs.

### DISCLOSURE OF INVENTION

The container transport coordination management system of this invention is a container transport coordination management system that performs coordination management for transporting containers belonging to the same shipping company from after loaded containers belonging to the same shipping company enter the port and customs procedures are completed at the container yard at the port, until the containers are transferred to a location A, the containers are unloaded at location A, then the empty containers are transferred to a location B and loaded at location B, then the loaded containers are transferred to the container yard at the port where customs procedures will be performed, and comprises: a database for location A in which various information indicating the scheduled date for unloading based on the import documents for location A, the specifications for the containers used, the number of containers used and the shipping company used is registered; a database for location B in which various information indicating the scheduled date for loading based on the export documents for location B, the specifications for the containers used, the number of containers used and the shipping company used is registered; a container-transport-coordination-management apparatus that, when the date the containers will enter the port is set, performs management for transporting containers based on the various information registered in the database for location A and the database for location B in order to find which containers belonging to the same shipping company can be shared between location A and location B; and terminals that are located at the container yard at the port, and at location A and location B and that can be used to access the container-transport-coordination apparatus.

Also, the container-transport-coordination-management apparatus can comprise: a schedule-creation unit that creates schedules for unloading at location A and schedules for loading at location B based on the various information registered in the database for location A and the database for location B; a matching-operation unit that finds a match from the schedules for unloading and the schedules for loading that were created by the schedule-creation unit; and an instruction-form-issuing unit that issues a schedule-instruction form for transporting containers based on the results of matching by the matching-operation unit.

Moreover, the container-transport-coordination-management apparatus can comprise a container-transport-coordination unit that performs coordination when containers are delayed in entering the port, or when it is learned that a container that entered the port and that is at the container yard at the port is damaged, or when it is learned that a container at location A is damaged, such that another different empty container belonging to the same company can be used.

Furthermore, the matching-operation unit can execute a process when the scheduled date for loading at location B is later than the scheduled unloading date at location A, or when of the specifications for the loaded containers transported to location A there are specifications that match the specifications of the containers to be used at location B, or when the number of loaded containers transported to location A matches the number of containers to be used at location B, or when the shipping company of the loaded containers transported to location A is the same as the company to be used at location B.

The container transport coordination management method of this invention is a container transport coordination management method of performing coordination management for transporting containers belonging to the same shipping company from after loaded containers belonging to the same shipping company enter the port and customs procedures are completed at the container yard at the port, until the containers are transferred to a location A, the containers are unloaded at location A, then the empty containers are transferred to a location B and loaded at location B, then the loaded containers are transferred to the container yard at the port where customs procedures will be performed, and comprises: a process of registering various information indicating the scheduled date for unloading based on the import documents for location A, the specifications for the containers used, the number of containers used and the shipping company used in a database for location A; a process of registering various information indicating the scheduled date for loading based on the export documents for location B, the specifications for the containers used, the number of containers used and the shipping company used in a database for location B; a process in which, when the date the containers will enter the port is set, management for transporting containers is performed based on the various information registered in the database for location A and the database for location B in order to find which containers belonging to the same shipping company can be shared between location A and location B; and a process of checking the coordination management from the container yard at the port, and from location A and location B.

Also, it is possible to comprise: a process of creating schedules for unloading at location A and schedules for loading at location B based on the various information registered in the database for location A and the database for location B; a process of finding a match from the schedules for unloading and the schedules for loading that were created by the schedule-creation unit; and a process of issuing a schedule-instruction form for transporting containers based on the matching results.

Moreover, it is possible comprise a process in which coordination is performed when containers are delayed in entering the port, or when it is learned that a container that entered the port and that is at the container yard at the port is damaged, or when it is learned that a container at location A is damaged, such that another different empty container belonging to the same company can be used.

Furthermore, it is possible to comprise a process that is executed when the scheduled date for loading at location B is later than the scheduled unloading date at location A, or when of the specifications for the loaded containers transported to location A matches the specifications of the containers to be used a location B, or when the number of loaded containers transported to location A matches the number of containers to be used at location B, or when the shipping company of the loaded containers transported to location A is the same as the company to be used at location B.

In the container transport coordination management system and container transport coordination management method of this invention, when performing coordination management for transporting containers belonging to the same company, various information indicating the scheduled date for unloading based on the import documents for location A, the specifications for the containers used, the number of containers used and the shipping company used is registered in a database for location A; various information indicating the scheduled date for loading based on the export documents for location B, the specifications for the containers used, the number of containers used and the shipping company used is registered in a database for location B; and when the date that the container will enter the port is set, coordination management for transporting containers is performed based on the various information registered in the database for location A and the database for location B to find which containers belonging to the same shipping company can be shared between location A and location B; and the results of that coordination management can be accessed by terminals located at the container yard at the port and at location A and location B.

In this invention, the database for location A and the database for location B can be located in the same memory apparatus, or can be located in separate memory apparatuses.

Also, when the database is a file server, the 'container-transport-coordination-management apparatus' can be a client (terminal PC, etc.).

### BRIEF DESCRIPTION OF THE DRAWINGS

Fig. 1 is a drawing for explaining the concept of the container transport coordination management system of this invention.
Fig. 2 is a drawing showing an embodiment of the container transport coordination management system of this invention.
Fig. 3 is a flowchart for explaining the container transport coordination management method of the container transport coordination management system shown in Fig. 2.
Fig. 4 is a drawing for explaining the container transport coordination management method of the container transport coordination management system shown in Fig. 2.
Fig. 5 is a drawing for explaining the container transport coordination management method of the container transport coordination management system shown in Fig. 2.
Fig. 6 is a drawing for explaining the flow of prior container transport when importing cargo.
Fig. 7 is a drawing for explaining the flow of prior container transport when exporting cargo.

### DESCRIPTION OF THE PREFERRED EMBODIMENT

The preferred embodiment of the invention will be explained below.

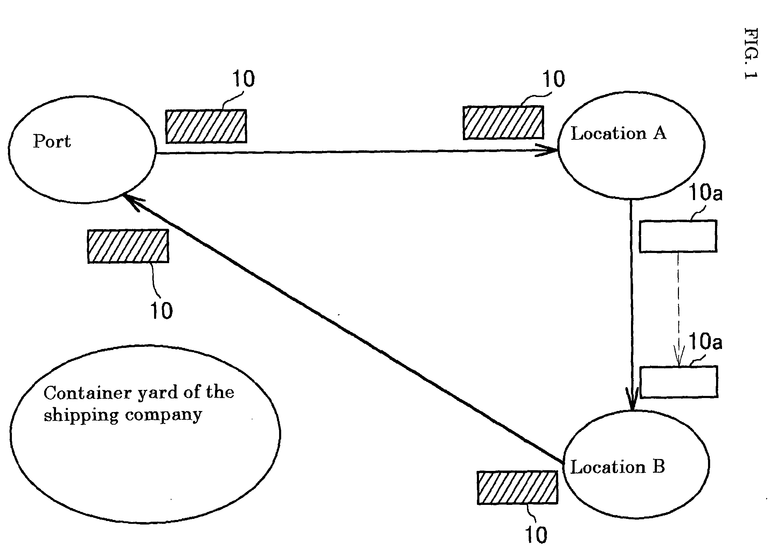

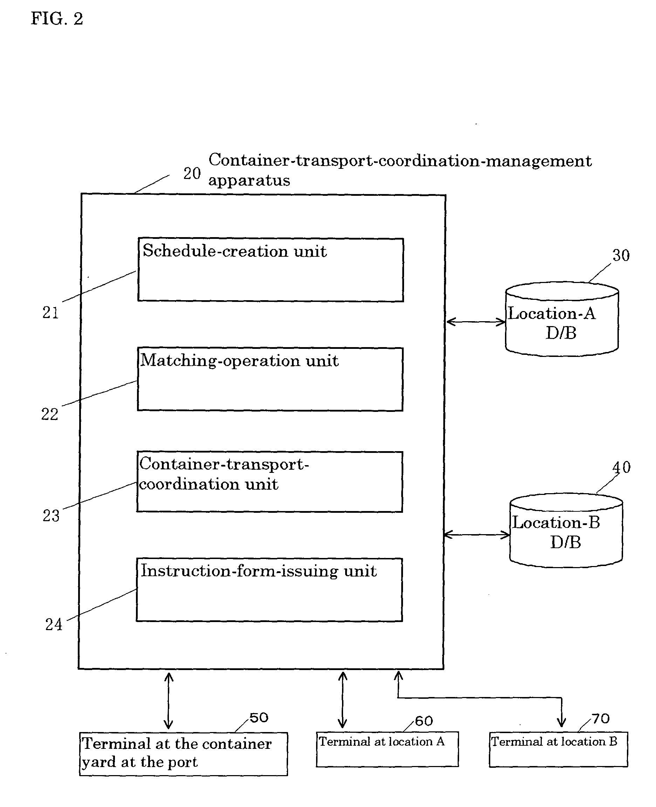

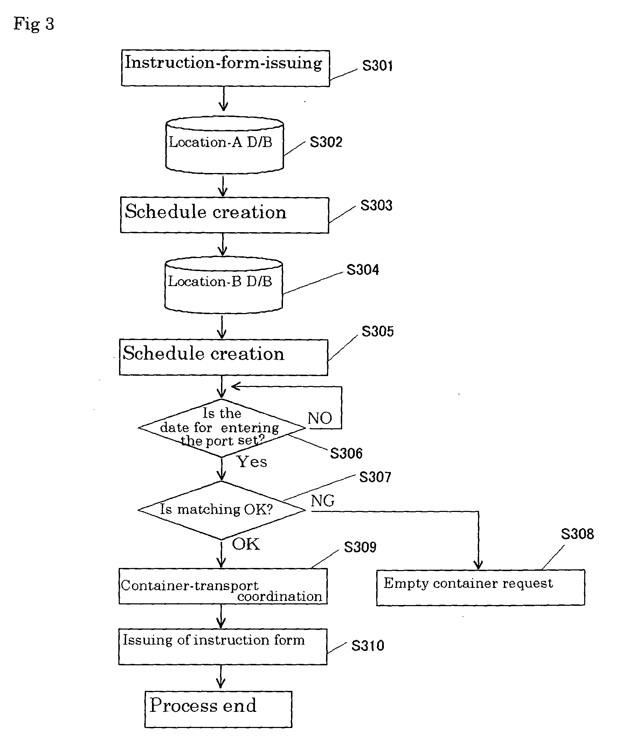

Fig. 1 is a drawing for explaining the concept of the container transport coordination management system of this invention, Fig. 2 is a drawing showing an embodiment of the container transport coordination management system of this invention, and Fig. 3 to Fig. 5 are drawings for explaining the container transport coordination management method of the container transport coordination management system shown in Fig. 2.
The container transport coordination management system of this invention performs coordination management for transporting containers belonging to the same shipping company, and as shown in Fig. 1, first, in the case of transporting a loaded container 10 to location A, after the container 10 reaches the container yard at the port for customs procedures, and after the customs procedures are finished, a truck receives the container 10 at that container yard and transports that container 10 to location A. At location A, the container 10 is unloaded, and that empty container 10a is then transported to location B, which is a little closer than the transport distance to the container yard of the shipping company. At location B, the container 10 is loaded, and it is transported by the same truck that transported it to location A to the container yard at the port. In this kind of coordination management of transporting containers belonging to the same shipping company, by matching the unloading schedule with the loading schedule as will be described later, when the container 10a that became empty at location A will be used at location B, the container that became empty at location A is transported to location B without returning to the container yard of the shipping company. By doing so, it is possible to greatly reduce having to return the container 10a from location A or location B to the container yard of the shipping company each time it becomes empty, so the efficiency of transporting the containers 10, 10a is greatly increased.

Next, the container transport coordination management system of this invention will be explained using Fig. 2.
The container transport coordination management system shown in Fig. 2 comprises: a container-transport-coordination-management apparatus 20; location-A D/B (database) 30, location-B D/B (database) 40, terminal 50 at the container yard at the port, terminal 60 at location A, and terminal 70 at location B.
Based on the various information (described later) that is registered in the location-A D/B 30 and location-B D/B 40, the container-transport-coordination-management apparatus 20 is able to know which containers belonging to the same shipping company can be shared between location A and location B, and performs coordination management for transporting the containers; and it comprises: a schedule-creation unit 21, matching-operation unit 22, container-transport-coordination unit 23 and instruction-form-issuing unit 24.
The schedule-creation unit 21 creates a schedule for unloading work at location A based on the various information (described later) for location A registered in the location-A D/B 30, and creates a schedule for loading work at location B based on the various information (described later) for location B registered in the location-B D/B 40.
The matching-operation unit 22 finds a match from the unloading schedules at location A and loading schedules at location B that are created by the schedule-creation unit 21, and this will be explained in detail later.

The container-transport-coordination unit 23 coordinates the unloading schedules at location A and loading schedules at location B when the container 10 was late entering the port. Also, when the container-transport coordination unit 23 learns that the container 10 in the container yard at the port is damaged, or that the container 10 at location A is damaged, it coordinates the unloading schedules at location A and loading schedules at location B so that another container 10 belonging to the same shipping company can be used.
The instruction-form-issuing unit 24 issues a schedule-instruction form for transporting a container based on the matching results from the matching-operation unit 23.
Various information that indicates the scheduled date for unloading at location A, specifications for the containers used, number of containers used, shipping company used and the load are registered in the location-A D/B 30.
Various information that indicates the scheduled date for loading at location B, specifications for the containers used, number of containers used, shipping company used and the load are registered in the location-B D/B 40.
The terminal 50 at the container yard at the port is connected to the container-transport-coordination-management apparatus 20 over a network, and it is used for checking schedule-instruction forms for transporting containers that were issued by the instruction-form-issuing unit 24, and used for sending notifications when it is learned that a container 10 in the container yard at the port is damaged.
Similarly, the terminal 60 at location A is used for checking schedule-instruction forms for transporting containers, sending notifications when it is learned that a container 10 at location A is damaged, and for sending the various information described above that is contained in the import documents.
In the same way, the terminal 70 at location B is used for checking schedule-instruction forms for transporting containers, and for sending the various information described above that is contained in the export documents.

Next, the container transport coordination management method of the container transport coordination management system constructed as described above will be explained. In the explanation below, the various information indicating the scheduled dates for unloading at location A, specifications for the containers used, the number of containers used, the shipping company used, and the load is already registered in the location-A D/B 30, and the various information indicating the scheduled dates for loading at location B, specifications for the containers used, the number of containers used, the shipping company used, and the load is already registered in the location-B D/B 40.
First, as shown in Fig. 3, when an instruction is sent to the container-transport-coordination-management apparatus 20 to issue an instruction form, the schedule-creation unit 21 creates a schedule for unloading at location A based on the various information indicating the scheduled dates for unloading at location A, specifications for the containers used, the number of containers used, the shipping company used, and the load that is registered in the location-A D/B 30 (steps 301 to 303). Also, the schedule-creation unit 21 creates a schedule for loading at location B based on the various information indicating the scheduled dates for loading at location B, specifications for the containers used, the number of containers used, the shipping company used, and the load that is registered in the location-B D/B 40 (steps 304 and 305).

Next, after the date that the loaded container 10 for location A will enter the port has been set (step 306), the matching-operation unit 22 finds a match from the schedules for unloading at location A and the schedules for loading at location B created by the schedule-creation unit 21 (step 307). Here, the matching process is executed: when the scheduled date for loading at location B is later than the scheduled date for unloading at location A; or when of the specifications of the loaded containers 10 that are transported to location A there are specifications that match the specifications of the container to be used at location B; or when the number of loaded containers transported to location A matches the number of the containers to be used at location B; or when the shipping company of the loaded container 10 transported to location A is the same as the shipping company to be used at location B.
Also, when a NG is determined from this kind of matching, another empty container belonging to the same shipping company other than a loaded container 10 transported to location A is requested. In other words, in the case where the scheduled date for loading at location B is earlier than the scheduled date for unloading at location A, for example, or in the case when of the specifications for the loaded containers 10 transported to location A, there are no specifications that match the specifications of the container to be used at location B, or in the case when the number of loaded containers 10 transported to location A is not enough for the number of containers to be used at location B, or in the case when the shipping company of the loaded containers 10 transported to location A is different than the shipping company to be used at location B, when some or all are NG, a different empty container 10 belonging to the same company as the loaded containers 10 transported to location A and requested by location B is requested (step 308).

On the other hand, in the case when matching is OK, the container-transport-coordination unit 23 coordinates transporting of the containers (step 309). Here, when a container 10 is late entering the port, the unloading schedules at location A and loading schedules at location B are coordinated. Also, when there is a notification from the terminal 50 at the container yard at the port that a container 10 that entered the port and that is at the container yard at the port is damaged, or when there is a notification from the terminal 60 at location A that a container 10 that was shipped from the container yard at the port and that is at location A is damaged, the unloading schedules at location A and loading schedules at location B are coordinated such that a different empty container 10a belonging to the same company as the container 10 can be used.
After transporting is coordinated by the container-transport-coordination unit 23 in this way, the instruction-form-issuing unit 24 issues a schedule-instruction form for transporting the container matched by the matching-operation unit 22 (step 310). Also, by checking that schedule-instruction form for transporting the container using the terminal 50 at the container yard at the port, the driver of the truck can transport the container according to the container-transport schedule.

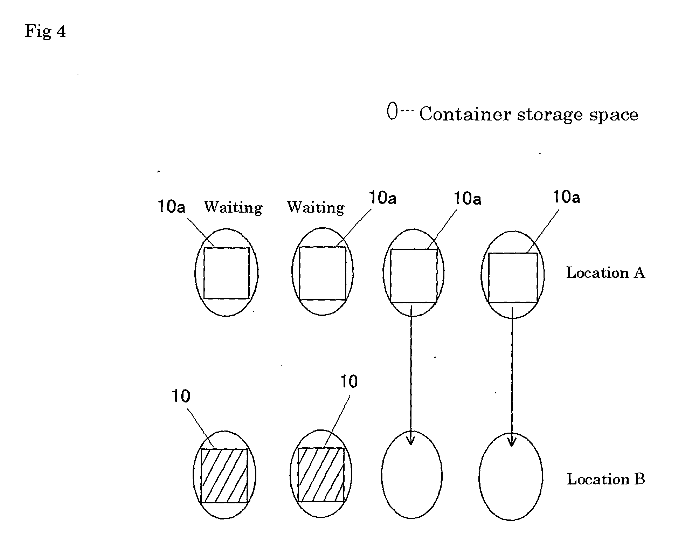

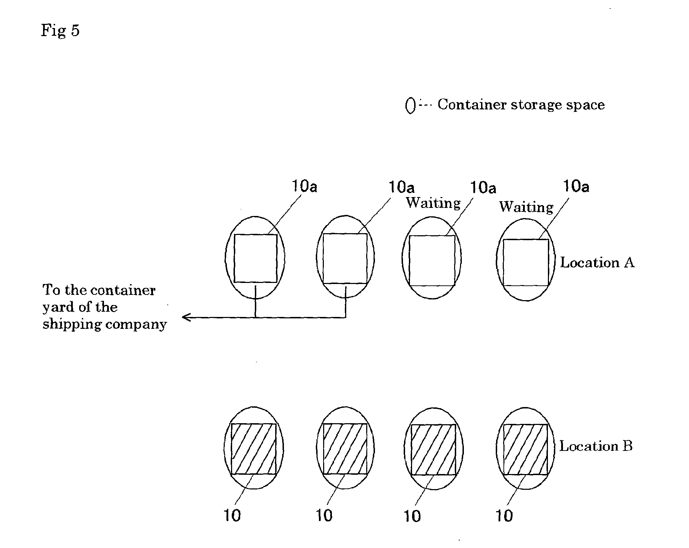

As shown in Fig. 4, when transporting the container, there are four container storage spaces at both location A and location B, and the case when all four of the loaded containers 10 transported to location A will also be used at location B will be supposed. In this case, when there are already two containers 10 stored in two storage spaces at location B and ready for loading, the number of empty containers 10a at location A to be transported to location B is adjusted to two, and two empty containers 10a at location A are waiting, and transport coordination can be performed such that at the scheduled time when container storage space becomes available at location B, the remaining empty containers 10a are transported from location A to location B.
Also, as shown in Fig. 5, when there are already containers 10 stored in all of the storage spaces at location B and ready for loading, and there are two empty containers 10a to be transported from location A to location B, the two empty containers 10a at location A wait, transport coordination can be performed such that at the scheduled time when container storage space becomes available at location B, the remaining empty containers 10a are transported from location A to location B. In this case, coordination is performed such that the remaining two empty containers 10a at location A are returned to the container yard of the shipping company. Also, when there is a notification from the terminal 60 at location A that there is damage to an empty container 10a, the container-transport-coordination unit 23 can perform coordination such that the damaged empty container 10 is returned to the container yard of the shipping company, and that a empty container other than that empty container 10a but belonging to the same company is transported to location B.

As described above, in this embodiment, when performing coordination management for transporting containers belonging to the same company, various information indicating the scheduled date for unloading based on the import documents for location A, the specifications for the containers used, the number of containers used and the shipping company used is registered in the location-A D/B 30; various information indicating the scheduled date for loading based on the export documents for location B, the specifications for the containers used, the number of containers used and the shipping company used is registered in the location-B D/B 40; and when the date that the container will enter the port is set, coordination management for transporting containers is performed based on the various information registered in the location-A D/B 30 and location-B D/B 40 to find which containers belonging to the same shipping company can be shared between location A and location B; and the results of that coordination management can be accessed by terminals 50 to 70 located at the container yard at the port and at location A and location B.
By doing this, it is possible to use the containers 10a that became empty at location A at location B, and since the containers 10a that became empty at location A are transported to location B without returning to the container yard of the shipping company, it is possible to improve the efficiency for transporting containers belonging to the same company, and to reduce the transportation costs.
In this embodiment, the case of transporting loaded containers 10 and empty containers 10a between the two locations, location A and location B, was explained, however, of course it is also possible to transport loaded containers 10 and empty containers 10a between three or more locations.

### Industrial Applicability

This invention is constructed as described above, so it is possible to improve the efficiency for transporting containers, and to reduce the transportation costs.

## Claims

1. A that performs coordination management for transporting containers belonging to the same shipping company from after loaded containers belonging to said same shipping company enter the port and customs procedures are completed at the container yard at the port, until said containers are transferred to a location A, said containers are unloaded at location A, then the empty containers are transferred to a location B and loaded at location B, then the loaded containers are transferred to the container yard at the port where customs procedures will be performed, and comprises:
a database for location A in which various information indicating the scheduled date for unloading based on the import documents for said location A, the specifications for the containers used, the number of containers used and the shipping company used is registered;
a database for location B in which various information indicating the scheduled date for loading based on the export documents for said location B, the specifications for the containers used, the number of containers used and the shipping company used is registered;
a container-transport-coordination-management apparatus that, when the date said containers will enter the port is set, performs coordination management for transporting said containers based on the various information registered in said database for location A and said database for location B in order to find which containers belonging to said same shipping company can be shared between location A and location B; and
terminals that are located at said container yard at said port, and at said location A and said location B and that can be used to access said container-transport-coordination apparatus.

2. The container transport coordination management system of claim 1 wherein
said container-transport-coordination-management apparatus comprises:
a schedule-creation unit that creates schedules for unloading at said location A and schedules for loading at said location B based on the various information registered in the database for said location A and the database for said location B;
a matching-operation unit that finds a match from the schedules for unloading and the schedules for loading that were created by said schedule-creation unit; and
an instruction-form-issuing unit that issues a schedule-instruction form for transporting containers based on the results of matching by said matching-operation unit.

3. The container transport coordination management system of claim 1 or claim 2 wherein
said container-transport-coordination-management apparatus comprises a container-transport-coordination unit that performs coordination when said containers are delayed in entering the port, or when it is learned that said container that entered the port and that is at said container yard at the port is damaged, or when it is learned that said container at said location A is damaged, such that another different empty container belonging to said same company can be used.

4. The container transport coordination management system of claim 2 or claim 3 wherein
said matching-operation unit execute a process when the scheduled date for loading at said location B is later than the scheduled unloading date at said location A, or when of the specifications for the loaded containers transported to said location A there are specifications that match the specifications of the containers to be used at said location B, or when the number of loaded containers transported to said location A matches the number of containers to be used at said location B, or when the shipping company of the loaded containers transported to said location A is the same as the company to be used at said location B.

5. A container transport coordination management method that performs coordination management for transporting containers belonging to the same shipping company from after loaded containers belonging to said same shipping company enter the port and customs procedures are completed at the container yard at the port, until the containers are transferred to a location A, the containers are unloaded at location A, then the empty containers are transferred to a location B and loaded at location B, then the loaded containers are transferred to the container yard at the port where customs procedures will be performed, and comprises:
a process of registering various information indicating the scheduled date for unloading based on the import documents for said location A, the specifications for the containers used, the number of containers used and the shipping company used in a database for location A;
a process of registering various information indicating the scheduled date for loading based on the export documents for said location B, the specifications for the containers used, the number of containers used and the shipping company used in a database for location B;
a process in which, when the date the containers will enter the port is set, coordination management for transporting containers is performed based on the various information registered in the database for said location A and the database for said location B in order to find which said containers belonging to said same shipping company can be shared between location A and location B; and
a process of checking said coordination management from said container yard at the port, and from said location A and said location B.

6. The container transport coordination management method of claim 5 further comprising:
a process of creating schedules for unloading at said location A and schedules for loading at said location B based on the various information registered in the database for said location A and the database for said location B;
a process of finding a match from the schedules for unloading and the schedules for loading that were created by said schedule-creation unit; and
a process of issuing a schedule-instruction form for transporting containers based on said matching results.

7. The container transport coordination management method of claim 5 or claim 6 further comprising a process in which coordination is performed when said containers are delayed in entering the port, or when it is learned that said container that entered the port and that is at said container yard at the port is damaged, or when it is learned that said container at said location A is damaged; such that another different empty container belonging to said same company can be used.

8. The container transport coordination management method of claim 6 or claim 7 further comprising a process in which processing is executed when the scheduled date for loading at said location B is later than the scheduled unloading date at said location A, or when of the specifications for the loaded containers transported to said location A there are specifications that match the specifications of the containers to be used at said location B, or when the number of loaded containers transported to said location A matches the number of containers to be used at said location B, or when the shipping company of the loaded containers transported to said location A is the same as the company to be used at said location B.
